# EUROPÄISCHE PATENTANMELDUNG

(11) **EP 0 940 310 A2**
(43) Veröffentlichungstag der Anmeldung: **08.09.1999**
(21) Anmeldenummer: 99104233.4
(22) Anmeldetag: 03.03.1999
(51) Int. Cl.: B60S 3/00, A47L 1/06

(54) **Fensterwischer für die Innenseite der Front- und/oder Heckscheibe eines Kraftfahrzeuges**

(30) Priorität: 04.03.1998 DE 29803704 U
(71) Anmelder: Beader, Miroslav, 71686 Remseck (DE)
(72) Erfinder: Beader, Miroslav, 71686 Remseck (DE)
(74) Vertreter: Becker, Bernd, Dipl.-Ing.

(57) **Zusammenfassung**

Ein Fensterwischer für die Innenseite der Front- und/oder Heckscheibe eines Kraftfahrzeuges umfaßt einen zumindest bereichsweise eine Wischauflage (8) tragenden Wischarm (1) und einen Griff (4). Der Wischarm (1) ist im wesentlichen nockenförmig ausgebildet, und mehrere Wischarme (1) sind übereinanderliegend auf einer im Zentrum der Grundkreise der Wischarme (1) liegenden Achse (2) drehbeweglich angeordnet. Dadurch sind die Randbereiche der Scheiben leicht erreichbar.

## Beschreibung

Die Erfindung bezieht sich auf einen Fensterwischer für die Innenseite der Front- und/oder Heckscheibe eines Kraftfahrzeuges mit einem zumindest bereichsweise eine Wischauflage tragenden Wischarm und einem Griff.

Ein aus der Praxis bekannter Fensterwischer ist im wesentlichen T-förmig aufgebaut und umfaßt einen mit einer Wischauflage versehenen, stabförmigen Wischarm, an dem mittig ein starrer, stabförmiger Griff befestigt ist. Die Wischauflage besteht aus einem filzartigen oder schlingen- bzw. faserförmigen, saugfähigen Material. Mittels eines mit dem Wischarm verbundenen Klettenbandes oder durch Kleben ist die Wischauflage auf dem Wischarm festgelegt. Dieser Fensterwischer eignet sich vor allem zur Reinigung gut zugänglicher Scheiben. Er ist aber insofern nachteilig, als bei beengten Einbausituationen der Scheibe zum einen der Griff hinderlich ist und zum anderen die Randbereiche der Scheibe mit dem Wischarm nur schwer zugänglich sind.

Bei einer geneigten Front- und/oder Heckscheibe eines Kraftfahrzeuges, an deren Innenseite sich randseitig eine Ablage, ein Armaturenbrett oder Dachholme anschließen und so den Bewegungsbereich beim Fensterwischen stark beeinträchtigen, ist die Verwendung des bekannten Fensterwischers zur Reinigung der Randbereiche der Scheibe schwierig. Speziell für den aerodynamischen Fahrzeugbau werden immer flacher geneigte Scheiben eingesetzt, wodurch sich zwischen der Frontscheibe sowie dem Armaturenbrett und zwischen der Heckscheibe sowie der Ablage relativ spitze und damit schwer zugängliche Winkel ergeben, die mit dem herkömmlichen Fensterwischer nicht erreichbar sind.

Es ist Aufgabe der Erfindung, einen Fensterwischer der eingangs genannten Art zu schaffen, mit dem die Erreichbarkeit aller Randbereiche einer Front- und/oder Heckscheibe sicherstellt und gleichzeitig eine großflächige Reinigung dieser Scheiben möglich ist.

Erfindungsgemäß wird die Aufgabe dadurch gelöst, daß der Wischarm im wesentlichen nockenförmig ausgebildet ist, und mehrere Wischarme übereinanderliegend auf einer im Zentrum der Grundkreise der Wischarme liegenden Achse drehbeweglich angeordnet sind.

Aufgrund dieser Maßnahmen orientieren sich die Wischarme des erfindungsgemäßen Fensterwischers selbsttätig. Im Randbereich einer Front- und/oder Heckscheibe eines Kraftfahrzeuges stoßen sie gegen die Einfassung bzw. die hier vorgesehene Dichtung der Scheibe und verdrehen sich unabhängig von der Hauptbewegungsrichtung während des Wischens entlang der Dichtung, weshalb eine Reinigung der Scheibe bis in deren äußersten Randbereich gegeben ist. Außerhalb der Randbereiche der zu reinigenden Scheibe erfolgt aufgrund der herrschenden Reibung zwischen den Wischarmen und der Scheibe eine Orientierung der Wischarme in der Hauptbewegungsrichtung des Fensterwischers. Da mehrere Wischarme vorgesehen sind, steht eine hinreichende Fläche für die Säuberung der Scheibe zur Verfügung. Die nockenförmige Ausbildung der Wischarme bewirkt, daß bei deren Verdrehung keine störenden Ecken über die jeweils anderen Wischarme hervorstehen.

Nach einer vorteilhaften Ausgestaltung der Erfindung trägt jeder Wischarm im Bereich seiner Spitze unterseitig die im wesentlichen dreieckförmige Wischauflage und der unterste Wischarm zusätzlich eine mit dem Grundkreis korrespondierende Wischauflage. Die Größen der dreieckförmigen Wischauflagen bestimmen den maximalen Überdeckungsbereich der Wischarme, da sie beim Überlappen der Wischarme an den jeweils benachbarten Wischarm anstoßen. Die Wischauflagen sind so auszulegen, daß neben einer einwandfreien Zugänglichkeit der Randbereiche dem Scheibe eine hinreichend große Wischfläche des Fensterwischers erzielt wird. Die zu dem Grundkreis des Wischarmes korrespondierende Wischauflage des untersten Wischarmes verhindert die Bildung von Putzstreifen auf der Scheibe, da sie die dreieckförmigen Wischauflagen überdeckend ergänzt.

Bevorzugt sind die dreieckförmigen Wischauflagen gegebenenfalls unter der Verwendung einer oder mehrerer Zwischenlagen an dem zugeordneten Wischarm befestigt. Die Dicke jeder Zwischenlage entspricht im wesentlichen der Materialstärke des Wischarmes. Somit wird ein Höhenausgleich geschaffen, der eine gleichmäßiger Auflage der Wischauflagen auf der Scheibe ohne die Verwendung unterschiedlich dicker Wischauflagen sicherstellt.

Zur einfachen Halterung des Griffs ist zweckmäßigerweise auf der Achse der Wischarme über dem obersten Wischarm eine Abdeckplatte drehbeweglich gelagert, die mit dem Griff verbunden ist. Die Anordnung der Abdeckplatte ermöglicht ferner eine vom Griff unabhängige Drehbewegung der Wischarme.

Damit keine störenden Ecken über die Wischarme hervorstehen, entspricht die Außenkontur der Abdeckplatte dem Grundkreis des oberen Wischarmes. Eine große Bewegungsfreiheit des Griffs ist dadurch erreicht, daß der Griff schwenkbar an der Abdeckplatte festgelegt ist. Hierdurch sind die spitzen Winkel, die zwischen der Frontscheibe sowie dem Armaturenbrett und zwischen der Heckscheibe sowie der Ablage vorliegen, relativ bequem zu erreichen. Zweckmäßigerweise ist der Griff U-förmig ausgebildet und mit seinen freien Enden in entsprechende Aufnahmen der Abdeckplatte eingeklipst. Somit ist sowohl die Fertigung als auch die Montage des Griffs kostengünstig zu bewerkstelligen.

Nach einer weiteren Ausgestaltung des Erfindungsgedankens ist im Bereich der Spitze eines jeden Wischarmes oberseitig ein Ende einer Zugfeder befestigt, deren anderes Ende derart an der Abdeckplatte festgelegt ist, daß die Spitzen der Wischarme unter einem gleichen Winkel zueinander ausgerichtet sind. Die Zugfedern bewirken eine definierte Zwangsstellung der Wischarme zueinander, aus der sie sich durch seitlichen, z.B. von einer Scheibendichtung bewirkten Druck herausdrehen können. In dieser Zwangsstellung überstreichen die Wischarme einen maximalen Bereich der Scheibe.

Bevorzugt sind drei Wischarme vorgesehen. Die drei Spitzen der Wischarme bilden in der Zwangsstellung ein Dreieck und ermöglichen die Reinigung der Randbereiche der Innenseite der Front- und/oder Heckscheibe.

Nach einer weiteren vorteilhaften Ausgestaltung der Erfindung sind die Wischarme aus einem nachgiebigen Kunststoff gefertigt. In einer alternativen Ausführung sind auf der Achse zwischen den Wischarmen kreisringförmige Federelemente angeordnet. Diese Maßnahmen stellen eine begrenzte Schwenkbewegung der Wischarme senkrecht zur Achse sicher, womit diese sich an die Form einer gewölbten Scheibe anpassen.

Zweckmäßigerweise ist die Achse der Wischarme und der Abdeckplatte als Niet ausgebildet, wobei der dem unteren Wischarm zugeordnete Nietkopf als in den Wischarm eingelassener Senkkopf und der der Abdeckplatte zugeordnete Nietkopf als die Abdeckplatte übergreifender Linsenkopf ausgeführt ist.

Bei einer alternativen Ausführung ist zweckmäßigerweise die Achse der Wischarme und der Abdeckplatte als Verschraubung ausgeführt, wobei der dem unteren Wischarm zugeordnete Schraubenkopf als in den Wischarm eingelassener Senkkopf oder dergleichen und die der Abdeckplatte zugeordnete Mutter als selbstsichernde Mutter ausgebildet ist. Die Verschraubung ermöglicht den einfachen Austausch einzelner Wischarme, wobei die selbstsichernde Mutter selbstverständlich derart auf der Schraube angeordnet ist, daß das Verdrehen der Wischarme gewährleistet ist.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

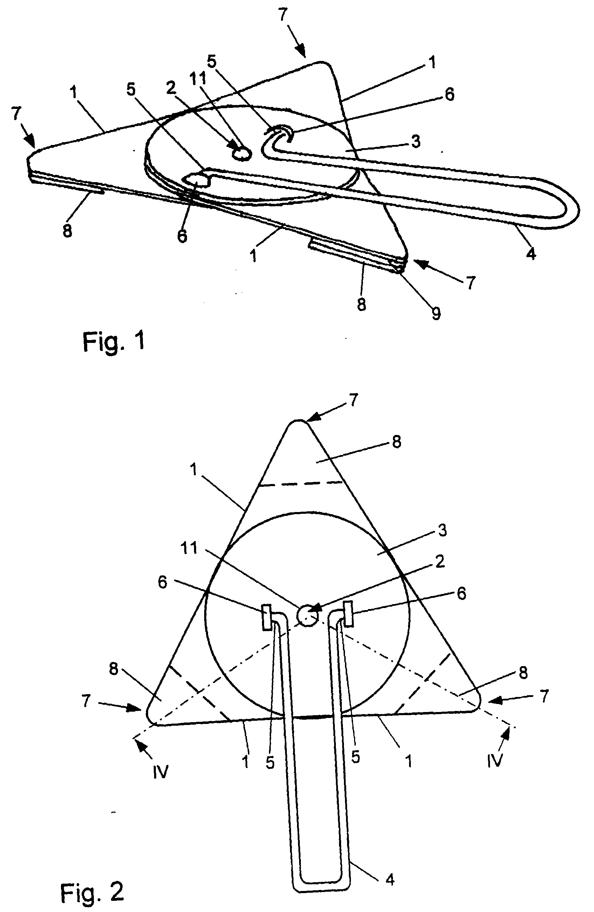

- Fig.1: eine perspektivische Darstellung eines erfindungsgemäßen Fensterwischers,
- Fig.2: eine Draufsicht auf die Darstellung nach Fig. 1,

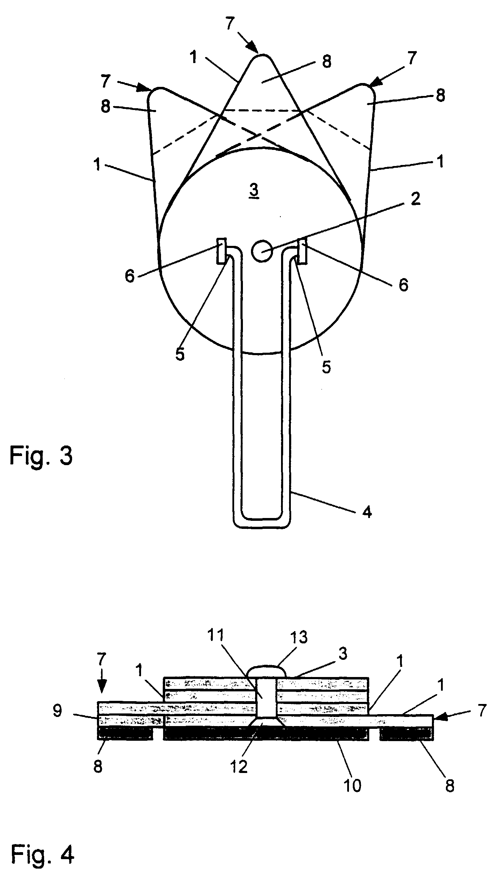

- Fig.3: eine Draufsicht auf den Fensterwischer nach Fig. 2 mit verschwenkten Wischarmen,
- Fig.4: einen Schnitt durch die Darstellung nach Fig. 2 gemäß Linie IV-IV und
- Fig.5: eine Draufsicht auf einen erfindungsgemäßen Fensterwischer in einer alternativen Ausführung.

Der Fensterwischer umfaßt im wesentlichen drei Wischarme 1, die auf einer gemeinsamen Achse 2 übereinanderliegend angeordnet sind, wobei sich die Achse 2 im Zentrum von Grundkreisen der nockenförmigen Wischarme 1 befindet und die Wischarme 1 drehbeweglich haltert. Oberhalb des obersten Wischarmes 1 ist ebenfalls auf der Achse 2 eine Abdeckplatte 3 drehbeweglich gelagert, auf der ein U-förmiger Griff 4 schwenkbar festgelegt ist. Hierbei sind die freien Enden 5 des Griffes 4 in entsprechende Aufnahmen 6 der Abdeckplatte 3 eingeklipst.

Jeder Wischarm 1 trägt unterseitig im Bereich seiner Spitze 7 eine im wesentlichen dreieckförmige Wischauflage 8 gleicher Dicke, die an dem mittleren Wischarm 1 unter Beifügung einer Zwischenlage 9 und an dem obersten Wischarm 1 unter der Beifügung von zwei Zwischenlagen 9 an dem Wischarm 1 befestigt ist. Zusätzlich ist an dem untersten Wischarm 1 eine mit dem Grundkreis korrespondierende Wischauflage 10 angeordnet.

Die Achse 2 ist als Niet 11 ausgebildet, der in entsprechende Nietbohrungen der Wischarme 1 mit Spiel eingesetzt ist. Der Nietkopf 12, der dem untersten Wischarm 1 zugeordnet ist, ist als Senkkopf ausgeformt und wird von der Wischauflage 10 überdeckt. Der der Abdeckplatte 3 zugeordnete Nietkopf 13 ist linsenförmig und übergreift die Abdeckplatte 3.

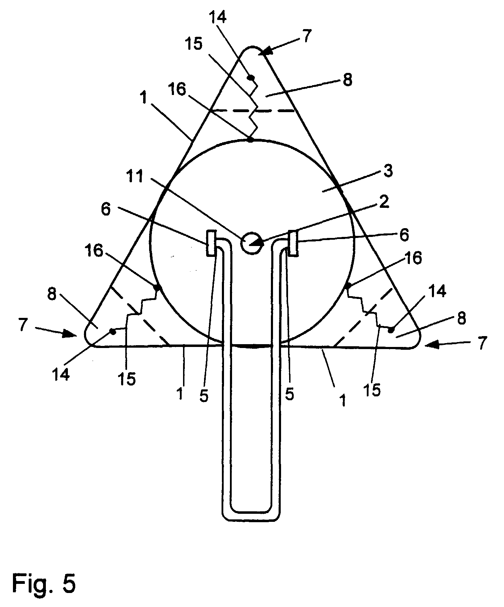

Um die Wischarme 1 in einer Zwangslage zu halten, ist im Bereich der Spitze 7 eines jeden Wischarmes 1 oberseitig ein Ende 14 einer Zugfeder 15 befestigt, deren anderes Ende 16 an der Abdeckplatte 3 festgelegt ist (Fig. 5). Die Spitzen 7 der Wischarme 1 nehmen nach der entsprechenden Festlegung der Druckfedern 15 eine Dreieckform zueinander ein. Diese Dreieckform bleibt während der Benutzung des Fensterwischers auf einer freien Fläche erhalten. Stößt eine Spitze 7 eines Wischarmes 1 gegen eine Begrenzung einer zu reinigenden Scheibe und der Fensterwischer wird weiterbewegt, dreht sich der Wischarm 1 und die Spitze 7 erhält eine andere Orientierung zu dem Griff 4. Hierbei gleitet die Spitze 7 stets an der Begrenzung entlang und sorgt für eine zuverlässige Reinigung der Scheibe in diesem Bereich.

## Patentansprüche

1. Fensterwischer für die Innenseite der Front- und/oder Heckscheibe eines Kraftfahrzeuges mit einem zumindest bereichsweise eine Wischauflage (8) tragenden Wischarm (1) und einem Griff (4), **dadurch gekennzeichnet**, daß der Wischarm (1) im wesentlichen nockenförmig ausgebildet ist, und mehrere Wischarme (1) übereinanderliegend auf einer im Zentrum der Grundkreise der Wischarme (1) liegenden Achse (2) drehbeweglich angeordnet sind.

2. Fensterwischer nach Anspruch 1, **dadurch gekennzeichnet,** daß jeder Wischarm (1) im Bereich seiner Spitze (7) unterseitig die im wesentlichen dreieckförmige Wischauflage (8) und der unterste Wischarm (1) zusätzlich eine mit dem Grundkreis korrespondierende Wischauflage (10) trägt.

3. Fensterwischer nach Anspruch 2, **dadurch gekennzeichnet,** daß die dreieckförmigen Wischauflagen (8) gegebenenfalls unter der Verwendung einer oder mehrerer Zwischenlagen (9) an dem zugeordneten Wischarm (1) befestigt sind.

4. Fensterwischer nach Anspruch 1, **dadurch gekennzeichnet,** daß auf der Achse (2) der Wischarme (1) über dem obersten Wischarm (1) eine Abdeckplatte (3) drehbeweglich gelagert ist, die mit dem Griff (4) verbunden ist.

5. Fensterwischer nach Anspruch 4, **dadurch gekennzeichnet,** daß die Außenkontur der Abdeckplatte (3) dem Grundkreis des oberen Wischarmes (1) entspricht.

6. Fensterwischer nach den Ansprüchen 4 und 5, **dadurch gekennzeichnet,** daß der Griff (4) schwenkbar an der Abdeckplatte (3) festgelegt ist.

7. Fensterwischer nach einem der Ansprüche 4 bis 6, **dadurch gekennzeichnet,** daß der Griff (4) U-förmig ausgebildet und mit seinen freien Enden (5) in entsprechende Aufnahmen (6) der Abdeckplatte (3) eingeklipst ist.

8. Fensterwischer nach einem der Ansprüche 1 bis 7, **dadurch gekennzeichnet,** daß im Bereich der Spitze (7) eines jeden Wischarmes (1) oberseitig ein Ende (14) einer Zugfeder (15) befestigt ist, deren anderes Ende (16) derart an der Abdeckplatte (3) festgelegt ist, daß die Spitzen (7) der Wischarme (1) unter einem gleichen Winkel zueinander ausgerichtet sind.

9. Fensterwischer nach einem der Ansprüche 1 bis 8, **dadurch gekennzeichnet,** daß drei Wischarme (1) vorgesehen sind.

10. Fensterwischer nach einem der Ansprüche 1 bis 9, **dadurch gekennzeichnet,** daß die Wischarme (1) aus einem nachgiebigen Kunststoff gefertigt sind.

11. Fensterwischer nach einem der Ansprüche 1 bis 9, **dadurch gekennzeichnet,** daß auf der Achse (2) zwischen den Wischarmen (1) kreisringförmige Federelemente angeordnet sind.

12. Fensterwischer nach einem der Ansprüche 1 bis 11, **dadurch gekennzeichnet,** daß die Achse (2) der Wischarme (1) und der Abdeckplatte (3) als Niet (11) ausgebildet ist, wobei der dem unteren Wischarm (1) zugeordnete Nietkopf (12) als in den Wischarm (1) eingelassener Senkkopf und der der Abdeckplatte (3) zugeordnete Nietkopf (13) als die Abdeckplatte (3) übergreifender Linsenkopf ausgeführt ist.

13. Fensterwischer nach einem der Ansprüche 1 bis 11, **dadurch gekennzeichnet,** daß die Achse (2) der Wischarme (1) und der Abdeckplatte (3) als Verschraubung ausgeführt ist, wobei der dem unteren Wischarm (1) zugeordnete Schraubenkopf als in den Wischarm (1) eingelassener Senkkopf oder dergleichen und die der Abdeckplatte (3) zugeordnete Mutter als selbstsichernde Mutter ausgebildet ist.
